# EUROPÄISCHE PATENTANMELDUNG

(11) **EP 4 851 023 A1**
(43) Veröffentlichungstag der Anmeldung: **09.12.2026**
(21) Anmeldenummer: 26166318.1
(22) Anmeldetag: 20.03.2026
(51) Int. Cl.: B62D 35/00, B60R 19/48

(54) **FAHRZEUG MIT EINEM AERODYNAMIKBÜGEL**

(30) Priorität: 04.06.2025 DE 102025121846
(71) Anmelder: MAN Truck & Bus SE, 80995 München (DE)
(72) Erfinder: Schmitz, Andreas, 80995 München (DE)

(57) **Zusammenfassung**

Die Erfindung betrifft ein Fahrzeug, bevorzugt einen Lastkraftwagen, mit einem Frontlenker-Fahrerhaus, wobei das Frontlenker-Fahrerhaus einen Frontstoßfänger (3) aufweist. Erfindungsgemäß ist vorgesehen, dass das Frontlenker-Fahrerhaus einen Aerodynamikbügel (13) aufweist, der an einer fahrzeugvorderen Unterkante (11) des Frontstoßfängers (3) angeordnet ist.

## Beschreibung

Die Erfindung betrifft ein Fahrzeug nach dem Oberbegriff des Anspruches 1.

Aus der EP 0 332 830 A2 ist ein gattungsgemäßes Fahrzeug, und zwar ein Lastkraftwagen mit einem Frontlenker-Fahrerhaus, bekannt. Das Frontlenker-Fahrerhaus weist einen Frontstoßfänger auf. An einer Frontseite des Frontstoßfängers ist ein Bügel des Fahrzeuges angeordnet, der den Frontstoßfänger im Crashfall vor mechanischen Beschädigungen schützen soll. Das Fahrzeug hat den Nachteil, dass das Fahrzeug, insbesondere durch die Geometrie im Bereich einer Unterseite des Frontstoßfängers, einen vergleichsweise hohen Luftwiderstandsbeiwert aufweist.

Die DE 43 08 021 A1 offenbart eine Einrichtung an Kraftfahrzeugen, insbesondere LKW's, zum Schutz von Lebewesen beim Aufprall auf das Fahrzeug. Aus der DE 28 12 021 A1 ist ein Lastkraftwagen mit einem Fahrerhaus bekannt.

Eine Aufgabe der Erfindung besteht darin, ein Fahrzeug bereitzustellen, das, im Vergleich zum Stand der Technik, einen geringeren Luftwiderstandsbeiwert aufweist.

Diese Aufgabe ist durch die Merkmale der unabhängigen Ansprüche gelöst. Bevorzugte Weiterbildungen der Erfindung sind in den Unteransprüchen offenbart.

Erfindungsgemäß vorgeschlagen ist ein Fahrzeug, bevorzugt ein Lastkraftwagen, mit einem Fahrerhaus, bevorzugt einem Frontlenker-Fahrerhaus, wobei das Fahrerhaus einen Frontstoßfänger aufweist. Erfindungsgemäß ist vorgesehen, dass das Fahrerhaus einen Aerodynamikbügel aufweist, der an einer fahrzeugvorderen Unterkante des Frontstoßfängers angeordnet ist. Durch den Aerodynamikbügel wird der Fahrtwind während der Fahrt des Fahrzeuges in einem großen Radius um die fahrzeugvordere Unterkante des Frontstoßfängers herumgeleitet. Dadurch ergeben sich an der Unterseite des Frontstoßfängers günstige Strömungsverhältnisse für den Fahrtwind, die den Luftwiderstand des Fahrzeuges reduzieren. Das Fahrzeug weist daher, im Vergleich zum Stand der Technik, einen geringeren Luftwiderstandsbeiwert auf.

Um ein gleichmäßiges Herumleiten des Fahrtwindes um die fahrzeugvordere Unterkante des Frontstoßfängers auf konstruktiv einfache Weise zu ermöglichen, ist bei einer bevorzugten Ausführungsform vorgesehen, dass der Aerodynamikbügel durch ein Rohr gebildet ist, das sich parallel zu einer Fahrzeugquerachse des Fahrzeuges erstreckt.

Um zu verhindern, dass der Aerodynamikbügel die Gesamtlänge des Fahrzeuges erhöht, ist bei einer exemplarischen Ausführungsform vorgesehen, dass der Aerodynamikbügel derart weit nach fahrzeugvorne über den Frontstoßfänger hinausragt, dass der Aerodynamikbügel die Increased Vehicle Dimension Hüllfläche des Fahrzeuges berührt.

Um zu verhindern, dass es an der Unterseite des Frontstoßfängers und somit in Richtung des Fahrzeughecks hinter dem Aerodynamikbügel zu unerwünschten Luftverwirbelungen des Fahrtwindes kommt, ist bei einer beispielhaften Ausführungsform vorgesehen, dass sich ausgehend von dem Aerodynamikbügel zumindest im Wesentlichen nach fahrzeughinten ein Windleitblech erstreckt, wobei bevorzugt vorgesehen ist, dass das Windleitblech in Fügeverbindung mit dem Aerodynamikbügel steht.

Um ein gleichmäßiges Überströmen des Fahrtwindes im Bereich des Aerodynamikbügels in den Bereich des Windleitbleches zu ermöglichen, ist bei einer beispielhaften Ausführungsform vorgesehen, dass eine, in negative Fahrzeughochachsenrichtung des Fahrzeuges zeigende, Deckfläche eines Bodenabschnittes des Windleitbleches tangential in eine Außenumfangsfläche des Aerodynamikbügels übergeht.

Um die Strömungsverhältnisse noch weiter zu verbessern, ist bei einer exemplarischen Ausführungsform vorgesehen, dass der Frontstoßfänger eine Unterlippe aufweist, die zwischen dem Windleitblech und einem Fahrzeugheck des Fahrzeuges angeordnet ist, und dass sich eine Ebene, in der sich eine nach fahrzeugunten zeigende Deckfläche eines Bodenabschnittes des Windleitbleches im Wesentlichen erstreckt, annähernd durch eine fahrzeugvordere Unterkante der Unterlippe erstreckt.

Um das Windleitblech dünnwandig und damit mit geringem Eigengewicht herstellen zu können, ist bei einer exemplarischen Ausführungsform vorgesehen, dass das Windleitblech mit einer Tragstruktur des Fahrzeuges mechanisch verstärkt ist.

Um das Windleitblech mittels der Tragstruktur auf einfache Weise mechanisch verstärken zu können, ist bei einer bevorzugten Ausführungsform vorgesehen, dass die Tragstruktur in Fügeverbindung, bevorzugt in Schweißverbindung und/oder Klebverbindung und/oder Nietverbindung und/oder Schraubverbindung, mit dem Windleitblech steht, wobei bevorzugt vorgesehen ist, dass die Tragstruktur, bevorzugt zumindest abschnittsweise, in flächigem Anlagekontakt mit dem Windleitblech, bevorzugt einem Bodenabschnitt des Windleitbleches, steht.

Um die Tragstruktur kostengünstig und mit geringem Eigengewicht herstellen zu können, ist bei einer bevorzugten Ausführungsform vorgesehen, dass die Tragstruktur durch ein Trapezblech oder durch ein Wellblech gebildet ist.

Um den Aerodynamikbügel auf einfache Weise und lösbar an dem Frontstoßfänger montieren zu können, ist bei einer beispielhaften Ausführungsform vorgesehen, dass der Aerodynamikbügel über zumindest eine Befestigungsanordnung des Fahrzeuges in Fügeverbindung, bevorzugt Schraubverbindung, mit dem Frontstoßfänger, bevorzugt einem Tragrohr des Frontstoßfängers, steht.

Damit die Tragstruktur die Aerodynamik des Fahrzeuges nicht in nachteiliger Weise beeinflusst, ist bevorzugt vorgesehen, dass die Tragstruktur zwischen dem Windleitblech und dem Frontstoßfänger, bevorzugt einem Tragrohr des Frontstoßfängers, angeordnet ist.

Beispielhaft ist vorgesehen, dass das Windleitblech den Bodenabschnitt sowie einen ersten Schenkelabschnitt und einen zweiten Schenkelabschnitt aufweist. Der erste Schenkelabschnitt und der zweite Schenkelabschnitt sind an gegenüberliegenden Seiten des Bodenabschnittes angeordnet und erstrecken sich jeweils ausgehend von dem Bodenabschnitt nach fahrzeugoben.

Um Verschmutzungen und Wasseransammlungen zu vermeiden, weist das Windleitblech Ablauföffnungen auf, die dazu ausgebildet sind und/oder dazu geeignet sind, dass Wasser und/oder Schmutz nach fahrzeugunten unter Schwerkraftwirkung abgeführt wird.

Bevorzugt ist vorgesehen, dass dem Fahrzeug ein kartesisches Fahrzeugkoordinatensystem mit einer Fahrzeuglängsachse, einer Fahrzeugquerachse und einer Fahrzeughochachse zugeordnet ist. Die positive Fahrzeuglängsachsenrichtung zeigt nach fahrzeugvorne. Die positive Fahrzeugquerachsenrichtung zeigt nach fahrzeuglinks. Die positive Fahrzeughochachsenrichtung zeigt nach fahrzeugoben. Der Ursprung des Fahrzeugkoordinatensystems liegt in etwa im Massenschwerpunkt des Fahrzeuges.

Das Fahrzeug, bevorzugt der Lastkraftwagen, kann batterieelektrisch betrieben sein.

Nachfolgend sind Ausführungsformen der Erfindung anhand der beigefügten Figuren beschrieben.

Es zeigen:
- Figur 1: in einer perspektivischen Ansicht von fahrzeugvorne einen Lastkraftwagen mit einem Aerodynamikbügel;
- Figur 2: in einer perspektivischen Ansicht von fahrzeugunten den Lastkraftwagen mit dem Aerodynamikbügel;
- Figur 3: in einer perspektivischen Seitenschnittansicht den Lastkraftwagen mit dem Aerodynamikbügel;
- Figur 4: in einer Seitenschnittansicht den Lastkraftwagen mit dem Aerodynamikbügel;
- Figur 5: in einer perspektivischen Ansicht eine erste Befestigungsanordnung des Aerodynamikbügels;
- Figur 6: in einer perspektivischen Ansicht von fahrzeugunten die Anbindungsstellen zur Befestigung des Aerodynamikbügels an einem Frontstoßfänger des Lastkraftwagens, und
- Figur 7: in einer perspektivischen Ansicht von fahrzeugunten eine erste Anbindungsstelle zur Befestigung des Aerodynamikbügels an einem Frontstoßfänger des Lastkraftwagens.

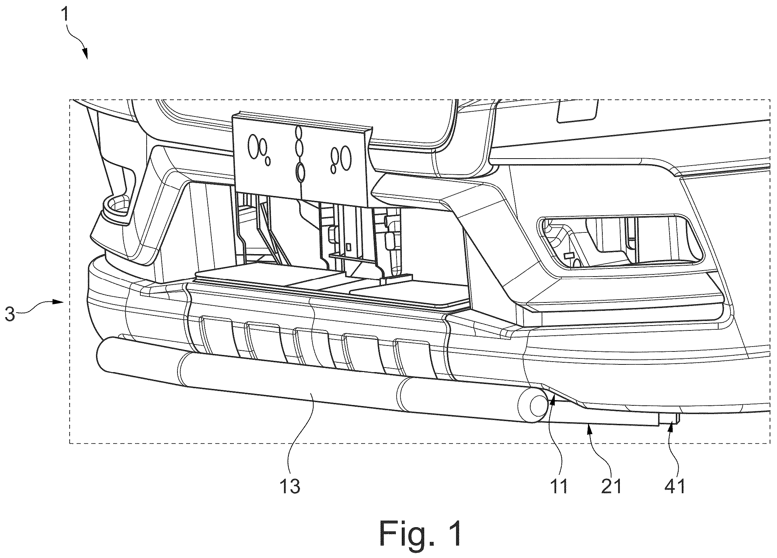

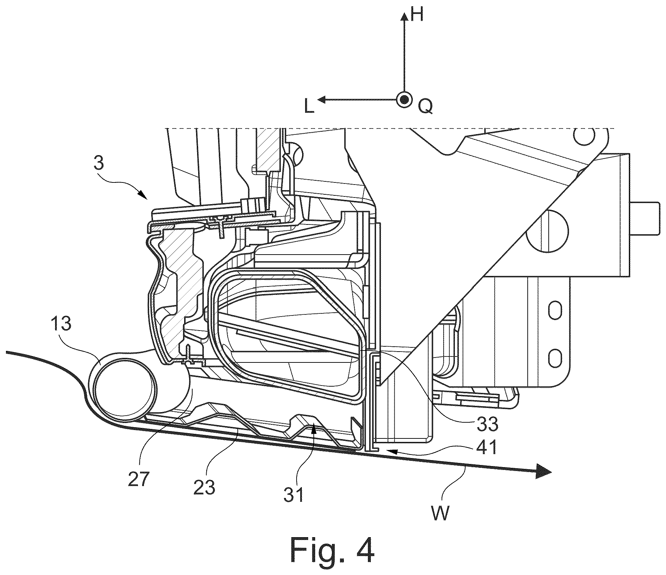

In der Figur 1 ist ein, beispielhaft durch einen Lastwagen mit Frontlenker-Fahrerhaus gebildetes, Fahrzeug 1 gezeigt. Dem Fahrzeug 1 ist ein, in der Figur 4 eingezeichnetes, kartesisches Fahrzeugkoordinatensystem mit einer Fahrzeuglängsachse L, einer Fahrzeugquerachse Q und einer Fahrzeughochachse H zugeordnet ist. Die positive Fahrzeuglängsachsenrichtung zeigt nach fahrzeugvorne. Die positive Fahrzeugquerachsenrichtung zeigt nach fahrzeuglinks. Die positive Fahrzeughochachsenrichtung zeigt nach fahrzeugoben. Auch wenn dies in der Figur 4 aus darstellerischen Gründen anders dargestellt ist, liegt der Ursprung des Fahrzeugkoordinatensystems in etwa im Massenschwerpunkt des Fahrzeuges 1.

Das Fahrzeug 1 weist einen Frontstoßfänger 3 auf, der mit Blickrichtung in negativer Fahrzeuglängsachsenrichtung vor der Vorderachse angeordnet ist und sich in etwa auf Höhe der Vorderachse erstreckt. An einer fahrzeugvorderen Unterkante 11 des Frontstoßfängers 3 ist ein Aerodynamikbügel 13 des Fahrzeuges 1 angeordnet. Wie dies insbesondere in der Figur 4 gut zu erkennen ist, ragt der Aerodynamikbügel 13 in positiver Fahrzeuglängsachsenrichtung nach fahrzeugvorne über den Frontstoßfänger 3 hinaus. Konkret ragt der Aerodynamikbügel 13 in positiver Fahrzeuglängsachsenrichtung derart nach fahrzeugvorne über den Frontstoßfänger 3 hinaus, dass der Aerodynamikbügel 13 die Increased Vehicle Dimension Hüllfläche (IVD-Hüllfläche) des Fahrzeuges 1 berührt aber in positiver Fahrzeuglängsachsenrichtung nicht über diese hinausragt.

Der Aerodynamikbügel 13 weist die Form eines Rohres, bevorzugt eines Rundrohres, auf und erstreckt sich parallel zu der Fahrzeugquerachse Q. Durch den Aerodynamikbügel 13 wird der Fahrtwind W während der Fahrt des Fahrzeuges 1, wie in der Figur 4 angedeutet, in einem großen Radius um die fahrzeugvordere Unterkante 11 des Frontstoßfängers 3 nach fahrzeugunten und fahrzeughinten herumgeleitet. Dadurch ergeben sich an der Unterseite des Frontstoßfängers 3 besonders günstige Strömungsverhältnisse für den Fahrtwind, die den Luftwiderstand des Fahrzeuges 1 reduzieren. Das Fahrzeug 1 weist daher einen besonders geringen Luftwiderstandsbeiwert (cW-Wert) auf.

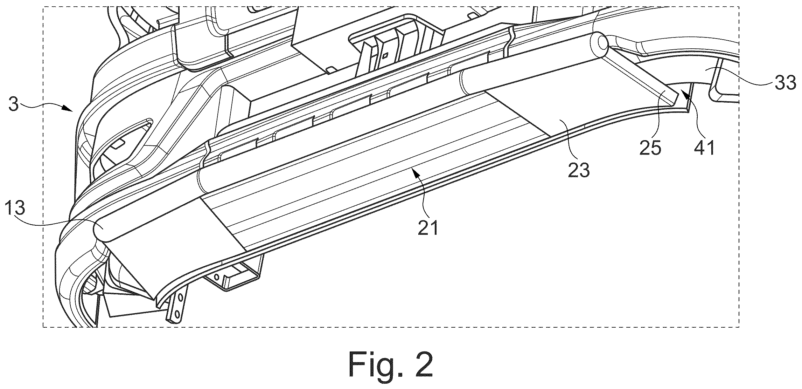

Das Fahrzeug 1 weist außerdem ein, insbesondere in der Figur 2 gut sichtbares, Windleitblech 21 auf. Das Windleitblech 21 weist die Form einer in positiver Fahrzeuglängsachsenrichtung und in negativer Fahrzeuglängsachsenrichtung offenen Wanne auf. Das Windleitblech 21 weist einen Bodenabschnitt 23 sowie einen ersten, fahrzeuglinksseitigen Schenkelabschnitt 25 und einen zweiten, fahrzeugrechtsseitigen Schenkelabschnitt 27 auf. Der erste Schenkelabschnitt 25 und der zweite Schenkelabschnitt 27 sind an gegenüberliegenden Seiten des Bodenabschnittes 23 angeordnet und erstrecken sich jeweils ausgehend von dem Bodenabschnitt 23 in positiver Fahrzeughochachsenrichtung. Der erste Schenkelabschnitt 25 und der zweite Schenkelabschnitt 27 sind jeweils einstückig und materialeinheitlich mit dem Bodenabschnitt 23 verbunden.

Das Windleitblech 21 steht in Fügeverbindung mit dem Aerodynamikbügel 13 und erstreckt sich ausgehend von dem Aerodynamikbügel 13 zumindest im Wesentlichen in negativer Fahrzeuglängsachsenrichtung. Das Windleitblech 21 ist relativ zu dem Aerodynamikbügel 13 derart angeordnet, dass eine, in negative Fahrzeughochachsenrichtung zeigende Deckfläche des Bodenabschnittes 23 im Wesentlichen tangential in die Außenumfangsfläche des rohrförmigen Aerodynamikbügels 13 übergeht. Der Werkstoff des Windleitbleches 21 kann eine Metalllegierung, bevorzugt eine Aluminiumlegierung, sein.

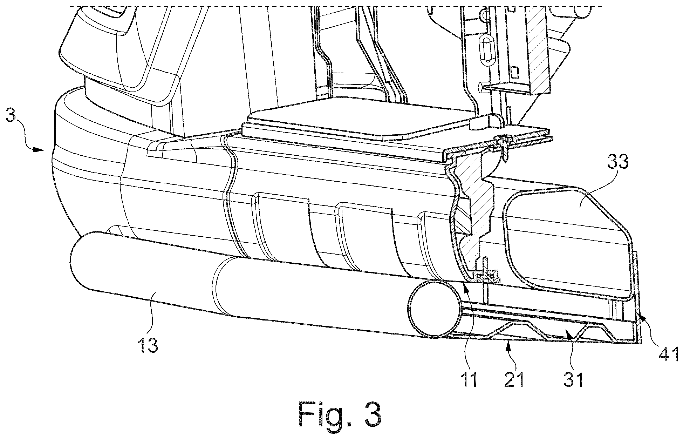

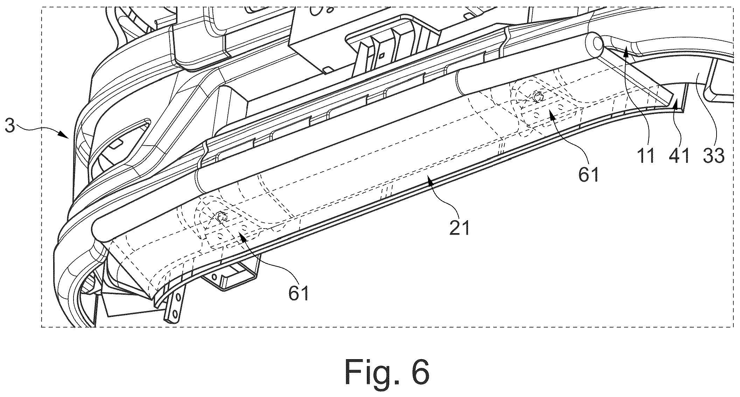

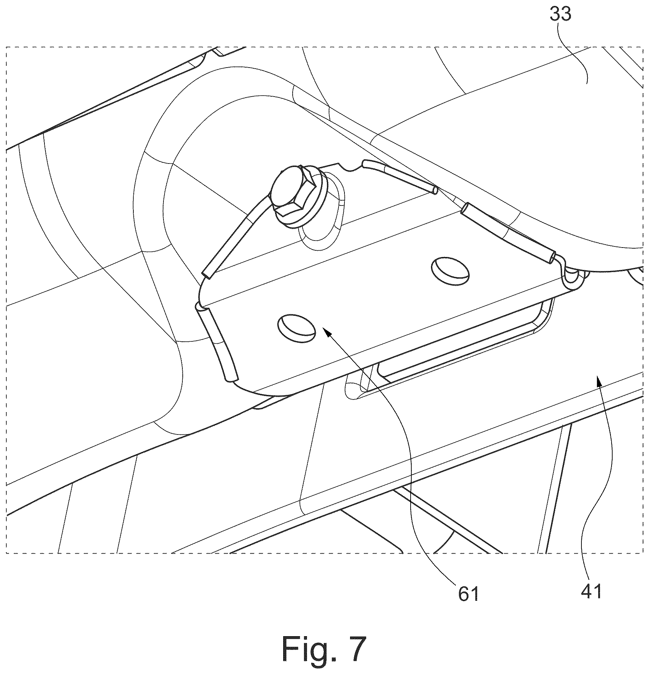

Das Windleitblech 21 ist mit einer Tragstruktur 31 mechanisch verstärkt. Die Tragstruktur 31 ist lediglich beispielhaft durch ein Trapezblech gebildet, das insbesondere in den Figuren 3 und 4 gut ersichtlich ist. Die Tragstruktur 31 ist abschnittsweise in flächigem Anlagekontakt mit dem Bodenabschnitt 23. Ferner steht die Tragstrukur 31 in Fügeverbindung mit dem Bodenabschnitt 23 und ist bevorzugt mit diesem verschweißt. Wie dies in den Figuren 3 und 4 ersichtlich ist, ist die Tragstruktur 31 zwischen dem Bodenabschnitt 23 und dem Frontstoßfänger 3, und zwar konkret einem, in den Figuren 2 bis sowie in den Figuren 6 und 7 dargestellten, Tragrohr 33 des Frontstoßfängers 3 angeordnet. Der Werkstoff der Tragstruktur 31 kann eine Metalllegierung, bevorzugt eine Aluminiumlegierung, oder ein Kunststoff sein.

Grundsätzlich gilt Folgendes: Das Windleitblech 21 und die Tragstruktur 31 können ein- oder mehrteilig ausgeführt sein. Selbstverständlich ist es möglich, dass das Windleitblech 21 und die Tragstruktur 31 materialeinheitlich oder einstückig miteinander verbunden sind und/oder gemeinsam ein Integralbauteil bilden. Beispielhaft kann der Werkstoff des Windleitblechs 21 und/oder der Tragstruktur 31 ein Kunststoff oder ein Metall sein. Das Windleitblech 21 und die Tragstruktur 31 können jeweils in einem Kunststoff-Spritzgussprozess hergestellt werden. Beispielsweise können das Windleitblech 21 und die Tragstruktur 31 gemeinsam und/oder als Integralbauteil in einem Kunststoff-Spritzgussprozess hergestellt werden.

Um Verschmutzungen und Wasseransammlungen zu vermeiden, weist das Windleitblech 21, insbesondere der Bodenabschnitt 23, Ablauföffnungen (nicht explizit dargestellt) auf. Die Ablauföffnungen sind dazu ausgebildet und/oder dazu geeignet , dass Wasser und/oder Schmutz nach fahrzeugunten unter Schwerkraftwirkung durch die Ablauföffnungen abgeführt wird.

Der Frontstoßfänger 3 weist ferner eine Unterlippe 41 auf. Die Unterlippe 41 ist beispielsweise in den Figuren 1 bis 4 sowie 6 und 7 ersichtlich. Die Unterlippe 41 erstreckt sich, mit Blickrichtung in negativer Fahrzeuglängsachsenrichtung, hinter der Tragstruktur 31 und erstreckt sich ausgehend von dem Tragrohr 33 in negativer Fahrzeughochachsenrichtung. Das Windleitblech 21 ist relativ zu der Unterlippe 41 derart angeordnet, dass sich die Ebene, in der sich die nach fahrzeugunten zeigende Deckfläche des Bodenabschnittes 23 des Windleitbleches erstreckt, annähernd durch eine fahrzeugvordere Unterkante der Unterlippe 41 erstreckt.

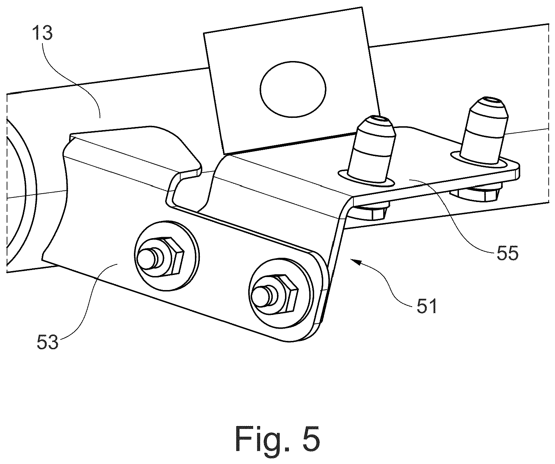

Über Befestigungsanordnungen 51, wie eine beispielhaft in der Figur 5 dargestellt ist, ist der Aerodynamikbügel 13 mit dem Tragrohr 33 verschraubt. Jede der Befestigungsanordnungen 51 weist ein bügelseitiges Blechteil 53 und ein tragrohrseitiges Blechteil 55 auf. Das bügelseitige Blechteil 53 steht in Schweißverbindung mit der Außenumfangsfläche des Aerodynamikbügels 13 und ist mit dem zweiten Blechteil 55 verschraubt. Das zweite Blechteil 55 ist an einer der, in den Figuren 6 und 7 gezeigten, Anbindungsstellen 61 mit dem Tragrohr 33 verschraubt. Das erste Blechteil 53 und das zweite Blechteil 55 ist jeweils beispielhaft durch ein Blechbiegeteil gebildet. In der Figur 6 ist das Windleitblech 21 zur besseren Erkennbarkeit der Anbindungsstellen 61 teiltransparent dargestellt.

### Bezugszeichenliste

- 1: Fahrzeug
- 3: Frontstoßfänger
- 11: Unterkante
- 13: Aerodynamikbügel
- 21: Windleitblech
- 23: Bodenabschnitt
- 25: erster Schenkelabschnitt
- 27: zweiter Schenkelabschnitt
- 31: Tragstruktur
- 33: Tragrohr
- 41: Unterlippe
- 51: Befestigungsanordnung
- 53: bügelseitiges Blechteil
- 55: tragrohrseitiges Blechteil
- 61: Anbindungsstelle

- L: Fahrzeuglängsachse
- Q: Fahrzeugquerachse
- H: Fahrzeughochachse
- W: Fahrtwind

## Patentansprüche

1. Fahrzeug, bevorzugt Lastkraftwagen, mit:
einem Fahrerhaus,
wobei das Fahrerhaus einen Frontstoßfänger (3) aufweist,
**dadurch gekennzeichnet,**
**dass** das Fahrerhaus einen Aerodynamikbügel (13) aufweist, der an einer fahrzeugvorderen Unterkante (11) des Frontstoßfängers (3) angeordnet ist.

2. Fahrzeug nach Anspruch 1, **dadurch gekennzeichnet,**
**dass** der Aerodynamikbügel (13) durch ein Rohr gebildet ist, das sich parallel zu einer Fahrzeugquerachse (Q) des Fahrzeuges (1) erstreckt.

3. Fahrzeug nach Anspruch 1 oder 2, **dadurch gekennzeichnet,**
**dass** der Aerodynamikbügel (13) derart weit nach fahrzeugvorne über den Frontstoßfänger (3) hinausragt, dass der Aerodynamikbügel (13) die Increased Vehicle Dimension Hüllfläche (IVD-Hüllfläche) des Fahrzeuges (1) berührt.

4. Fahrzeug nach einem der vorhergehenden Ansprüche, **dadurch gekennzeichnet, dass** sich ausgehend von dem Aerodynamikbügel (13) zumindest im Wesentlichen nach fahrzeughinten ein Windleitblech (21) erstreckt,
wobei bevorzugt vorgesehen ist, dass das Windleitblech (21) in Fügeverbindung mit dem Aerodynamikbügel (13) steht.

5. Fahrzeug nach Anspruch 4, **dadurch gekennzeichnet,**
**dass** eine, in negative Fahrzeughochachsenrichtung des Fahrzeuges (1) zeigende, Deckfläche eines Bodenabschnittes (23) des Windleitbleches (21) tangential in eine Außenumfangsfläche des Aerodynamikbügels (13) übergeht.

6. Fahrzeug nach Anspruch 4 oder 5, **dadurch gekennzeichnet,**
**dass** der Frontstoßfänger (3) eine Unterlippe (41) aufweist, die zwischen dem Windleitblech (21) und einem Fahrzeugheck des Fahrzeuges (1) angeordnet ist, und dass sich eine Ebene, in der sich eine nach fahrzeugunten zeigende Deckfläche eines Bodenabschnittes (23) des Windleitbleches (21) im Wesentlichen erstreckt, annähernd durch eine fahrzeugvordere Unterkante der Unterlippe (41) erstreckt.

7. Fahrzeug nach einem der Ansprüche 4 bis 6, **dadurch gekennzeichnet,**
**dass** das Windleitblech (21) mit einer Tragstruktur (31) des Fahrzeuges (1) mechanisch verstärkt ist.

8. Fahrzeug nach Anspruch 7, **dadurch gekennzeichnet,**
**dass** die Tragstruktur (31) in Fügeverbindung, bevorzugt in Schweißverbindung und/oder Klebverbindung und/oder Nietverbindung und/oder Schraubverbindung, mit dem Windleitblech (21) steht,
wobei bevorzugt vorgesehen ist, dass die Tragstruktur (31), bevorzugt zumindest abschnittsweise, in flächigem Anlagekontakt mit dem Windleitblech (21), bevorzugt einem Bodenabschnitt (23) des Windleitbleches (21), steht.

9. Fahrzeug nach Anspruch 7 oder 8, **dadurch gekennzeichnet,**
**dass** die Tragstruktur (31) durch ein Trapezblech oder durch ein Wellblech gebildet ist.

10. Fahrzeug nach einem der vorhergehenden Ansprüche, **dadurch gekennzeichnet, dass** der Aerodynamikbügel (13) über zumindest eine Befestigungsanordnung (51) des Fahrzeuges (1) in Fügeverbindung, bevorzugt Schraubverbindung, mit dem Frontstoßfänger (3), bevorzugt einem Tragrohr (33) des Frontstoßfängers (3), steht.
